# EUROPÄISCHE PATENTSCHRIFT

(11) **EP 1 421 349 B1**
(45) Veröffentlichungstag und Bekanntmachung des Hinweises auf die Patenterteilung: **17.02.2016**
(21) Anmeldenummer: 02797588.7
(22) Anmeldetag: 17.08.2002
(51) Int. Cl.: G01F 1/84, G01F 15/14

(54) **DURCHFLUSS-MESSWERTAUFNEHMER VOM VIBRATIONSTYP**
VIBRATION-TYPE FLOW SENSOR
CAPTEUR DE DÉBIT DE FLUIDE DU TYPE VIBRANT

(30) Priorität: 29.08.2001 EP 01120561; 20.02.2002 EP 02003821
(43) Veröffentlichungstag der Anmeldung: 26.05.2004
(73) Patentinhaber: Endress + Hauser Flowtec AG, 4153 Reinach BL 1 (CH)
(72) Erfinder: BITTO, Ennio, CH-4147 Aesch (CH); SCHÜTZE, Christian, CH-4055 Basel (CH); MOMENTE, Omar, CH-4147 Aesch (CH)
(74) Vertreter: Andres, Angelika Maria
(86) Internationale Anmeldenummer: PCT/EP2002/009212
(87) Internationale Veröffentlichungsnummer: WO 2003/021203

(56) Entgegenhaltungen:
- EP-A- 1 001 254
- WO-A-01/33174
- US-A- 4 876 898
- US-A- 5 301 557
- US-A- 6 044 715

## Beschreibung

Die Erfindung betrifft eine Gehäusekappe für einen Meßaufnehmer vom Vibrationstyp sowie einen diese Gehäusekappe verwendenden Meßaufnehmer.

In der Prozeßmeß- und Automatisierungstechnik werden für die Messung physikalischer Parameter eines in einer Rohrleitung strömenden Fluids, wie z.B. dem Massedurchfluß, der Dichte und/oder der Viskosität, oftmals solche Meßgeräte verwendet, die mittels eines vom Fluid durchströmten Meßaufnehmers vom Vibrationstyp und einer daran angeschlossenen Meß- und Betriebsschaltung, im Fluid Reaktionskräfte, wie z.B. mit dem Massedurchfluß korrespondierende Corioliskräfte und mit der Dichte korrespondierende Trägheitskräfte etc., bewirken und von diesen abgeleitet ein den jeweiligen Massedurchfluß und/oder ein die jeweilige Dichte des Fluids repräsentierendes Meßsignal erzeugen.

Derartige Coriolis-Massedurchflußmesser oder Coriolis-Massedurchfluß-/ Dichtemesser sind z.B. in der WO-A 01/ 33 174, der WO-A 00/ 57 141, der WO-A 98/ 07 009, der US-A 57 96 011, der US-A 53 01 557, der US-A 48 76 898, der EP-A 553 939, der EP-A 1 001 254 oder in der nicht vorveröffentlichten europäischen Patentanmeldung EP 01 120 561.4 beschrieben. Zum Führen des Fluids umfassen die Meßaufnehmer jeweils mindestens ein in einem Trägerrahmen gehaltertes Meßrohr mit einem gebogenen Rohrsegment, das zum Erzeugen oben genannter Reaktionskräfte, angetrieben von einer elektromechanischen Erregeranordnung, im Betrieb vibrieren gelassen wird. Zum Erfassen, insb. einlaßseitger und auslaßseitiger, Vibrationen des Rohrsegments weisen die Meßaufnehmer ferner jeweils eine auf Bewegungen des Rohrsegments reagierende Sensoranordnung auf.

Das Meßrohr sowie die Erreger- und die Sensoranordnung sind von einer mit dem Trägerrahmen verbundenen, insb. mit diesem verschweißten, Gehäusekappe umgeben. Das mittels Trägerrahmen und Gehäusekappe gebildete Gehäuse dient neben der Halterung des wenigstens einen Meßrohrs insb. auch dazu, dieses, die Erreger- und die Sensoranordnung sowie andere innenliegenden Bauteile vor äußeren Umwelteinflüssen, wie z.B. Staub oder Spritzwasser, zu schützen.

Eine entsprechende Gehäusekappe für einen Meßaufnehmer vom Vibrationstyp zum Einhausen von wenigstens einem gebogenen, im Betrieb des Meßaufnehmers vibrierenden Rohrsegments eines fluidführenden Meßrohrs ist z.B. in der
WO-A 00/ 57 141, der US-A 53 01 557, der EP-A 1 001 254 oder in der europäischen Patentanmeldung EP 01 120 561.4 beschrieben, welche Gehäusekappe umfaßt:
- ein rinnenförmiges erstes Kappensegment
-- mit einem ersten Segmentrand und
- mit einem zum ersten Segmentrand im wesentlichen identisch geformten zweiten Segmentrand,
- ein im wesentlichen ebenes zweites Kappensegment,
- das über einen ersten Segmentrand mit dem ersten Segmentrand des ersten Kappensegments verbunden ist sowie
- ein zum zweiten Kappensegment im wesentlichen spiegelsymmetrisches drittes Kappensegment, das über einen ersten Segmentrand mit dem zweiten Segmentrand des ersten Kappensegments verbunden ist.

Seitens der Anwender wird an derartige Gehäuse für Meßaufnehmer, insb. auch an deren jeweilige Gehäusekappe, häufig auch die Anforderung gestellt, daß sie im Falle eines Berstens des Rohrsegments dem dann zumeist deutlich über dem Außendruck liegenden Innendruck zumindest für eine vorgegebene Dauer leckfrei standhalten, vgl. hierzu auch die WO-A 00/ 57 141, die US-A 60 44 715, die US-A 53 01 557 oder die EP-A 1 001 254. Zumindest für Anwendungen mit toxischen oder leicht entzündbaren Fluiden muß das Gehäuse ggf. auch die an einen Sicherheitsbehälter zu stellenden Anforderungen erfüllen können.

Während die geforderte mechanische Stabilität, insb. die geforderte Druckfestigkeit, vom Trägerrahmen naturgemäß zumeist ohne weiteres aufgebracht werden können, insb. dann, wenn dieser inform eines zylindrischen Trägerrohrs ausgeführt ist, sind an den Gehäusekappen aufgrund von deren für Sicherheitsbehälter ungünstigen Raumform entsprechende zusätzliche Maßnahmen zur Erhöhung der Druckfestigkeit zu ergreifen.

Die Gehäusekappen solcher Gehäuse werden üblicherweise mittels tiefgezogener Halbzeuge einstückig gefertigt. Des weiteren können diese Gehäusekappen aber auch aus einzelnen schalenförmigen Halbzeugen zusammengesetzt sein, die wie z.B. in der europäischen Patentanmeldung EP 01 120 561.4 vorgeschlagen, von geringer Wandstärke im Bereich von wesentlich kleiner 5 mm oder, wie z.B. in der US-A 60 44 715 angedeutet, von größerer Wandstärke sein können. Während, wie auch bereits in der europäischen Patentanmeldung EP 01120 561.4 ausgeführt, mittels Tiefziehen hergestellte Gehäusekappen aufgrund der sehr teuren Werkzeuge praktisch erst für große Stückzahlen marktfähig hergestellt werden können, besitzen die auch bei geringen Stückzahlen kostengünstiger herzustellenden zusammengesetzten Gehäusekappen oftmals nicht die erforderlichen Druckfestigkeiten.

Ausgehend vom genannten Stand der Technik besteht daher eine Aufgabe der Erfindung darin, ein für einen Meßaufnehmer vom Vibrationstyp geeignetes Gehäuse anzugeben, das einerseits möglichst kostengünstig zu fertigen und andererseits möglichst druckfest ist.

Zur Lösung der Aufgabe besteht die Erfindung in einem Meßaufnehmer vom Vibrationstyp gemäß dem unabhängigen Anspruch 1.

Nach einer bevorzugten ersten Ausgestaltung der Erfindung liegen das zweite und dritte Kappensegment jeweils in einer Tangentialebene des ersten Kappensegments.

Nach einer bevorzugten zweiten Ausgestaltung der Erfindung weisen das zweite und das dritte Kappensegment dem Einstellen der erforderlichen Biegesteifigkeit dienende Versteifungselemente auf.

Nach einer bevorzugten dritten Ausgestaltung ist das Spannelement ein das zweite und das dritte Kappensegment durchstoßender Zugbolzen.

Nach einer bevorzugten vierten Ausgestaltung der Erfindung weisen das zweite und das dritte Kappensegment dem Einstellen der erforderlichen Biegesteifigkeit dienende Versteifungselemente auf, wobei das Spannelement ein das zweite und das dritte Kappensegment durchstoßender Zugbolzen und die Versteifungselemente mittels des Zugbolzens gegen die Kappensegmente gedrückt gehaltene Versteifungsplatten von vorgebbarer Dicke sind.

Ein Grundgedanke der Erfindung besteht darin, einerseits einen möglichst großen Bereich der Gehäusekappe so auszuformen, daß ein innerer Überdruck in diesem gewählten Bereich im wesentlichen nur Zugspannungen erzeugt, wodurch wiederum der Anteil an solchen Bereichen, in denen potentiell Biegespannungen auftreten können, möglichst gering gehalten wird. Andererseits sind jene besonders gefährdeten Bereiche, in denen Biegespannungen auftreten können, so gestaltet, daß sie auch bei innerem Überdruck möglichst formstabil bleiben.

Ein Vorteil der Erfindung besteht darin, daß aufgrund der Verwendung des rinnenförmigen und daher vergleichsweise dünnwandig ausführbaren Kappensegments bei einer im Vergleich z.B. zum Gehäuse gemäß der eingangs erwähnten europäischen Patentanmeldung EP 01 120 561.4 eher geringen Erhöhung der Masse, z.B. durch die Verwendung zusätzlicher Versteifungs- und/oder Spannelemente im Bereich der beiden ebenen Kappensegmente, eine deutliche Erhöhung der Druckfestigkeit erzielt werden kann. Untersuchungen haben hierbei ergeben, daß bei einer Zunahme der Masse von etwa 20%, z.B. durch Verwendung von als Versteifungselemente dienenden Seitenplatten und von als Spannelemente dienenden Zugbolzen, und bei praktisch gleichbleibender Geometrie eine Erhöhung der Druckfestigkeit von über 200% erreicht werden kann.

Die Erfindung wird nun anhand der Figuren der Zeichnung näher erläutert, in der ein bevorzugtes Ausführungsbeispiel dargestellt ist. Funktionsgleiche Teile sind in den einzelnen Figuren mit denselben Bezugszeichen versehen, die jedoch in nachfolgenden Figuren nur dann wiederholt sind, wenn es sinnvoll erscheint.
Fig. 1 zeigt eine Seitenansicht eines als Coriolis-Durchfluss/DichteNiskositäts-Aufnehmer ausgebildeten Meßaufnehmers,
Fig. 2 zeigt eine Vorderansicht des Meßaufnehmers von Fig. 1,
Fig. 3 zeigt perspektivisch in einer schematisierten Explosionsdarstellung den Meßaufnehmer gemäß Fig. 1 und
Fig. 4 zeigt perspektivisch und teilweise geschnitten den Meßaufnehmer von Fig. 1.

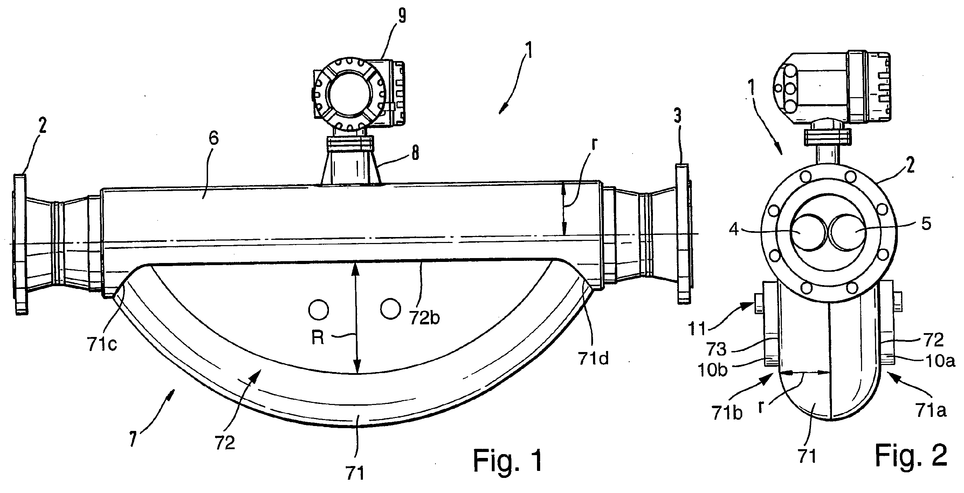

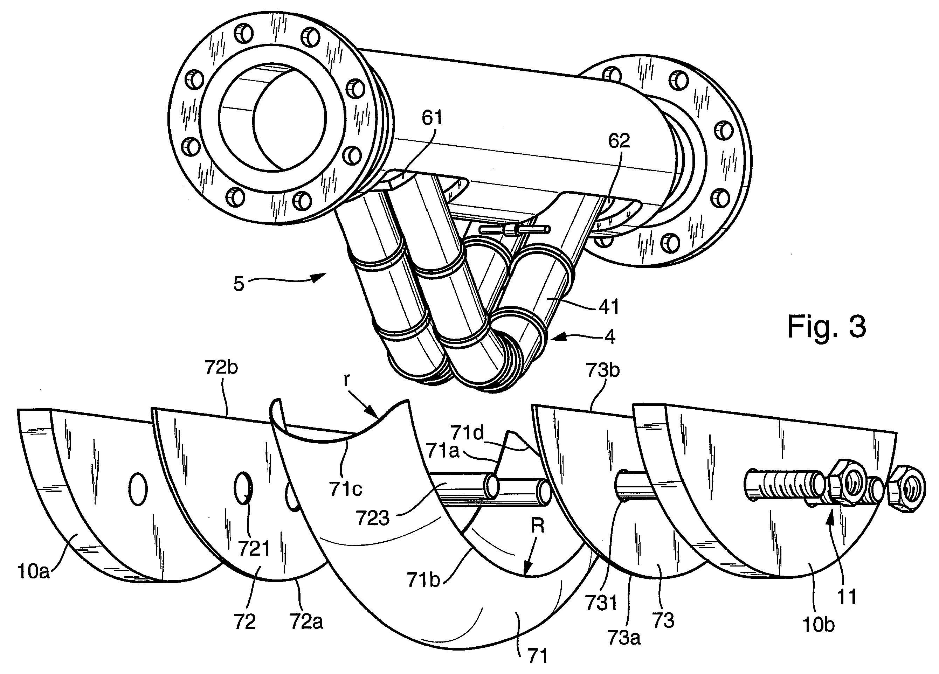

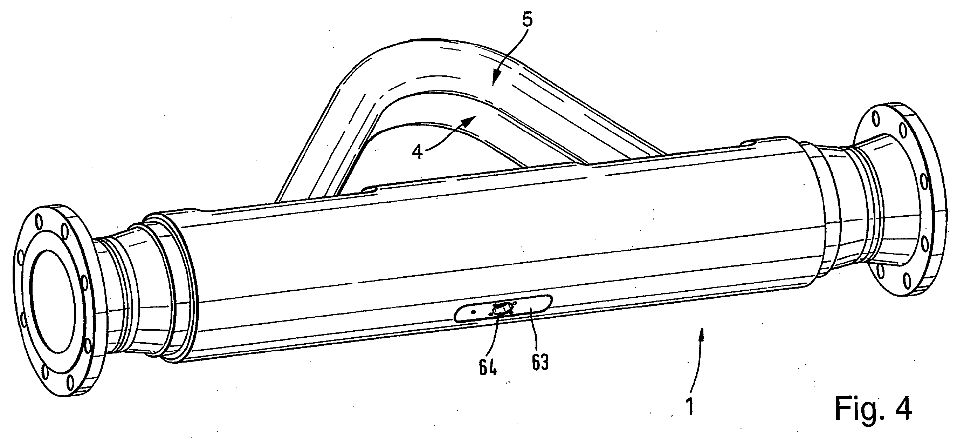

In den Fig. 1 bis 4 ist in unterschiedlichen Darstellungsarten ein, insb. als Coriolis-Massedurchfluss-, als Dichte- und/oder als Viskositäts-Aufnehmer dienender, Meßaufnehmer 1 vom Vibrationstyp gezeigt, und zwar sind in der Fig. 1 die Seitenansicht des Meßaufnehmers 1, in Fig. 2 dessen Vorderansicht sowie in den Fig. 3 und 4 perspektivische Ansichten des Meßaufnehmers 1 aus zwei unterschiedlichen Blickwinkeln dargestellt. Die Fig. 1 bis 4 werden im Folgenden gemeinsam erläutert.

Der Meßaufnehmer 1 ist im Betrieb in den Verlauf einer von einem zu messenden flüssigen, gasförmigen oder dampfförmigen Fluid durchströmten - aus Gründen der Übersichtlichkeit jedoch nicht dargestellten - Rohrleitung eines gegebenen Durchmessers über Flansche 2, 3, einzusetzen. Anstatt mittels Flanschen kann der Meßaufnehmer 1 an die erwähnte Rohrleitung auch durch andere bekannte Mittel angeschlossen werden, wie z.B. mittels Triclamp-Anschlüssen oder Schraubverbindungen.

Der Meßaufnehmer 1 weist mindestens ein Meßrohr 4 zum Führen des Fluids mit wenigstens einem in wenigstens einer Ebene zumindest abschnittsweise gebogen Rohrsegment 41; neben dem Messrohr 4 kann ferner, wie auch in den Fig. 3 und 4 gezeigt, ein zu diesem im wesentlichen identisches, paralleles zweites Meßrohr 5 vorgesehen sein.

Das Rohrsegment 41 des Meßrohrs 4 wird im Betrieb von einer, z.B. an einem Scheitel fixierten, hier jedoch nicht dargestellten, Erregeranordnung zu auslegerartigen Vibrationen, vorzugsweise auf einer momentanen mechanischen Resonanzfrequenz, erregt, bei denen es aus der oben erwähnten Ebene lateral ausgelenkt wird. Anders gesagt, das Rohrsegment 41 kann in einem Biegeschwingungsmode nach der Art eines Auslegers schwingen gelassen werden.

Zum Erfassen von Vibrationen des Rohrsegments 41 ist ferner eine, hier ebenfalls nicht dargestellte, Sensoranordnung vorzusehen, mittels der in der für derartige Meßaufnehmer üblichen Weise, insb. einlaß- und auslaßseitige, Vibrationen des Rohrsegments 41 signalisiert und einer elektronischen Weiterverarbeitung zugeführt werden können.

Das Meßrohr 4 ist von einem, vorzugsweise metallischen, Gehäuse umhüllt, das aus einem Trägerrahmen 6 und aus einer Gehäusekappe 7 besteht. Als Material für das Gehäuse, insb. auch die Gehäusekappe 7, kann z.B. Baustahl oder aber auch rostfreier Stahl verwendet werden.

Wie in Fig. 3 dargestellt, ist das Meßrohr 4 im, hier rohrförmigen, Trägerrahmen 6 einlaß- und auslaßseitig gehaltert, und zwar so, daß das schwingfähige Rohrsegment 41, durch zwei Ausnehmungen 61, 62 des Trägerrahmens 6 verlaufend, seitwärts aus diesem heraus- und somit in die am Trägerrahmen 6 fixierte Gehäusekappe 7 hineinragt.

Das Gehäuse dient einerseits dazu, die innenliegenden Bauteile des Messaufnehmers 1, wie z.B. das Meßrohr 4, die Erreger- und die Sensoranordnung etc., vor äußeren Umwelteinflüssen, wie z.B. Staub oder Spritzwasser, zu schützen. Andererseits aber dient das Gehäuse auch dazu, bei allfälligen Schäden am Meßrohr 4 oder ggf. am Meßrohr 5, z.B. durch Rißbildung oder Bersten, ausströmendes Fluid bis zu einem geforderten maximalen Überdruck im Inneren des Gehäuses möglichst vollständig zurückzuhalten.

In Fig. 1 ist schließlich noch ein am Trägerrahmen 6, hier am Trägerrohr, mittels eines halsartigen Übergangsstücks 8 fixiertes Elektronik-Gehäuse 9 gezeigt, in dem sich eine Mess- und Betriebsschaltung des Messaufnehmers 1 befindet; diese erzeugt einerseits ein die erwähnte Erregeranordnung speisendes Erregersignal, andererseits empfängt die Mess- und Betriebsschaltung die Signale der erwähnten Sensoranordnung und generiert daraus gewünschte, den Massedurchfluss, die Dichte, die Viskosität oder die Temperatur des strömenden Fluids repräsentierende Signale, die weiterverarbeitet oder angezeigt werden können.

In den Fig. 3 und 4 sind das Übergangsstück 8 und das Elektronik-Gehäuse 9 weggelassen; lediglich in Fig. 4 ist eine Ansatzfläche 63 für das Übergangsstück 8 zu sehen. In der Ansatzfläche 63 ist eine elektrische Durchführung 64 angeordnet, mittels der elektrische Verbindungen zur oben erwähnten Erregeranordnung und zu den oben erwähnten Sensoranordnung sowie gegebenenfalls weiteren elektrischen Komponenten, wie z.B. Temperatursensoren, herstellbar sind.

Die dem Einhausen des Rohrsegments 41 dienende Gehäusekappe 7 umfaßt, wie in Fig. 3 schematisch dargestellt, ein rinnenförmiges erstes Kappensegment 71 sowie ein im wesentlichen ebenes zweites Kappensegment 72 und ein zu diesem im wesentlichen spiegelsymmetrisches drittes Kappensegment 73. Die Form des Kappensegments 71 entspricht, wie aus Fig. 3 ohne weiteres ersichtlich, im wesentlichen der einer toroidalen Schale. Dementsprechend weist das Kappensegment 71 einen im wesentlichen kreisbogenförmigen, bevorzugt halbkreisförmigen, Querschnitt von vorgebbarem Radius r auf und, zumindest virtuell, einen im wesentlichen kreisbogenförmigen ersten Segmentrand 71 a mit einem im Vergleich zum Radius r wesentlich größeren Radius R sowie einem zum ersten Segmentrand im wesentlichen identisch geformten zweiten Segmentrand 71 b. Falls erforderlich, kann sowohl der Querschnitt als auch der Segmentrand nicht ideal-kreisförmig, also leicht elliptisch geformt sein, zumindest insoweit, als eine Elastizität und/oder Duktilität des Materials der Gehäusekappe 7 so gewählt ist, daß die Gehäusekappe 7 auf einen steigenden Innendruck allenfalls mit einer Anpassung der Form des Kappensegments 71 an die einer idealen Torusschale reagiert.

Erfindungsgemäß sind dazu die seitlichen Kappensegmente 72, 73 so ausgebildet, daß sie jeweils eine wesentlich größere Biegesteifigkeit als das rinnenförmige Kappensegment 71 aufweisen, wodurch eine hohe Formstabilität, insb. auch bei einem maximal zulässigen inneren Überdruck, der potentiell biegespannungsbeanspruchten Kappensegmente 72, 73 und somit eine erhebliche Verbesserung der Druckfestigkeit der gesamten Gehäusekappe 7 erreicht wird.

Wie aus der Zusammenschau der Fig. 1, 2 und 3 ohne weiteres ersichtlich, sind die Kappensegmente 72, 73 jeweils über einen kreisbogenförmigen ersten Segmentrand 72a bzw. 73a mit dem ersten bzw. zweiten Segmentrand 71 a, 71 b des Kappensegments 71 verbunden, und zwar bevorzugt so, daß die Kappensegmente 72, 73 jeweils in einer Tangentialebene des Kappensegments 71 und somit zu einer an den zugehörigen Segmentrand 71 a bzw. 71b anlegbaren Tangente fluchtend ausgerichtet sind. Anders gesagt, zwischen den beiden Kappensegmenten 71, 72 bzw. den beiden Kappensegmenten 71, 73 soll jeweils ein weitgehend stetiger, also möglichst glatter Übergang geschaffen werden, in dem bei zulässigem innerem Überdruck möglichst keine oder nur sehr geringe Biegespannungen erzeugt werden. Außerdem ist die Gehäusekappe 7 über einen dritten Segmentrand 71 c und einen vierten Segmentrand 71 d des Kappensegments 71 sowie über jeweils einen zweiten Segmentrand 72b, 73b des zweiten und dritten Kappensegments 72 bzw. 73 am Trägerrahmen 6 fixiert, und zwar so, daß die Kappensegmente 71, 72, 73 im Betrieb vom wenigstens einen vibrierenden Rohrsegment 41 beabstandet bleiben.

Die Verwendung der in der genannten Weise geformten Kappensegmente 71, 72, 73 beruht insb. auf der Erkenntnis, daß einerseits Druckgefäße mit rein zugspannungsbeanspruchten Gefäßwänden eine weitaus höhere Druckfestigkeit aufweisen können als solche mit biegespannungsbeanspruchten Gefäßwänden von vergleichbarer Wandstärke, andererseits aber ein ideales Druckgefäß, nämlich in Form einer Hohlkugel, für Meßaufnehmer der beschriebenen Art praktisch nicht realisierbar ist.

Aufgrund dessen, daß ein Bereich der Gehäusekappe, nämlich das Kappensegment 71, lediglich zugspannungsbeansprucht wird, kann für die Gehäusekappe 7 trotz einer vergleichsweise geringen Wanddicke in diesem Bereich von einigen wenigen Millimetern, insb. kleiner 5 mm, eine hohe Druckfestigkeit erreicht werden. Somit können solche Maßnahmen, die zum Zwecke der Erhöhung der Druckfestigkeit eine Erhöhung von Biegesteifigkeiten der Gehäusekappe 7 bewirken sollen, in vorteilhafter Weise auf die Kappensegmente 72, 73 beschränkt bleiben. Deren Flächenanteil an der Gesamtoberfläche der Gehäusekappe 7 wiederum kann im Rahmen der vorgegebenen Einbaumaße ohne weiteres minimal gehalten werden.

Anders gesagt, die Größe des im wesentlichen nur zugspannungsbeanspruchten Kappensegments 71 kann so optimiert werden, daß der die erfindungsgemäße Gehäusekappe 7 verwendende Meßaufnehmer möglichst kompakt bleibt, jedenfalls aber im Bereich der üblichen Einbaumaße vergleichbarer herkömmlicher Meßaufnehmer vom Vibrationstyp liegen kann. Ferner kann so auch der mit zusätzlich angebrachten Versteifungselementen 10a, 10b einhergehende Massenzuwachs verglichen mit herkömmlichen Gehäusekappen von vergleichbarer Druckfestigkeit gering gehalten werden.

Zur Herstellung der Gehäusekappe 7 können die Kappensegmente 71, 72, 73 z.B. jeweils einzeln vorgefertigt und nachträglich zusammengefügt, insb. miteinander verschweißt werden. In vorteilhafter Weise kann bei der Herstellung der Gehäusekappe 7 z.B. auch das in der bereits erwähnten europäischen Patentanmeldung EP 01 120 561.4 beschriebene Verfahren zum Herstellen einer als Gehäusekappe 7 verwendbaren Metallkappe angewendet werden, bei dem diese durch Verschweißen zweier im wesentlichen identisch geformter, insb. aus einem tellerförmigen Halbzeug ausgeschnittener, Kappenhälften mit einer, insb. viertel-torusförmigen, Randwulst gebildet wird. Ferner kann die Gehäusekappe 7 z.B. auch aus einem Metallblech von entsprechender Dicke tiefgezogen werden.

Nach einer bevorzugten Ausgestaltung der Erfindung wird die erhöhte Biegesteifigkeit der Kappensegmente 72, 73 und damit auch deren hohe Formstabilität dadurch erreicht, daß die Kappensegmente 72, 73 Versteifungselemente 10a, 10b aufweisen. Die Versteifungselemente 10a, 10b können z.B. auf den Kappensegmenten 72, 73 fixierte Platten oder Streifen oder aber auch in die Kappensegmente 72, 73 eingeformte Sicken sein.

Nach einer anderen bevorzugten Ausgestaltung der Erfindung wird die hohe Biegesteifigkeit der Kappensegmente 72, 73 dadurch erreicht, daß das Gehäuse 7 wenigstens ein die beiden Kappensegmente 72, 73 miteinander verspannendes Spannelement 11 umfaßt.

Als Spannelement 11 dient nach einer weiteren bevorzugten Ausgestaltung der Erfindung ein Zugbolzen, der, wie einer Zusammenschau der Fig. 2 und 3 entnehmbar, durch einander gegenüberliegende Bohrungen 721, 731 in den Kappensegmente 72, 73 und ggf. durch entsprechende Bohrungen in den als Versteifungselemente 10a, 10b dienenden Platten hindurchgeführt und der, mittels Spannmuttern entsprechend fixiert, die beiden Kappensegmente 72, 73 miteinander verspannt hält.

Wie in der Fig. 3 dargestellt, ist die Gehäusekappe 6 mittels einer mit den Bohrungen 721, 731 kommunizierenden, an die Ränder der Bohrungen 721, 731 jeweils angeschlossenen, z.B. angeschweißten, Verbindungsröhre 723 im Bereich der Bohrungen 721, 731 in erforderlicher Weise fluiddicht gehalten.

Diese Ausgestaltung der Erfindung hat insb. auch den Vorteil, daß im Vergleich zu herkömmlichen Gehäusen ohne signifikanten fertigungstechnischen Mehraufwand zunächst ein fluiddichter, jedoch nicht zwangsweise mechanisch hochbelastbarer Teil der Gehäusekappe 7 gebildet wird, der durch nachträgliches, insb. wieder lösbares, Fixieren mechanisch hochbelastbarer Anbauten bis zu einem, insb. auch stufenweise, vorgebbaren Überdruck druckfest gemacht werden kann. Diese Ausgestaltung der Erfindung kann in vorteilhafter Weise insb. auch bei bereits bestehenden Gehäusekonzepten verwendet werden, wodurch mit einem geringem zusätzlichen Fertigungs- und Montageaufwand auch bei herkömmlichen Gehäusen deren Druckfestigkeit in erheblichem verbessert werden kann.

## Patentansprüche

1. Meßaufnehmer (1) vom Vibrationstyp, welcher Meßaufnehmer umfaßt:
- mindestens ein Meßrohr zum Führen eines Fluids;
- einen das Meßrohr (4) halternden, insb. rohrförmigen, Trägerrahmen (6); sowie
- eine Gehäusekappe (7) zum Einhausen von wenigstens einem gebogenen, im Betrieb des Meßaufnehmers (1) vibrierenden Rohrsegment (41) des fluldführenden Meßrohrs (4),
-- wobei die Gehäusekappe (7)
- ein rinnenförmiges erstes Kappensegment (71) mit einem kreisbogenförmigen ersten Segmentrand (71a) von vorgebbarem Radius R und mit einem zum ersten Segmentrand (71 a) im wesentlichen identisch geformten zweiten Segmentrand (71 b),
-- ein im wesentlichen ebenes zweites Kappensegment (72), das über einen kreisbogenförmigen ersten Segmentrand (72a) mit dem ersten Segmentrand (71 a) des ersten Kappensegments (71) verbunden ist, sowie
--- ein zum zweiten Kappensegment (72) im wesentlichen spiegelsymmetrisches drittes Kappensegment (73), das über einen kreisbogenförmigen ersten Segmentrand (73a) mit dem zweiten Segmentrand (71 b) des ersten Kappensegments (71) verbunden ist, umfaßt,
- wobei das erste Kappensegment (71) einen kreisbogenförmigen Querschnitt mit einem Radius r aufweist, der kleiner als der Radius R des ersten Segmentrands (71 a) ist, und
---- wobei das zweite und dritte Kappensegment (72, 73) jeweils eine wesentlich größere Biegesteifigkeit als das erste Kappensegment (71) aufweisen, und
-- wobei die Gehäusekappe (7)
-- über einen dritten Segmentrand (71 c) und einen vierten Segmentrand (71 d) des ersten Kappensegments (71) sowie über jeweils einen zweiten Segmentrand (72b) bzw. (73b) des zweiten und dritten Kappensegments (72, 73) an dem Trägerrahmen (6) so fixiert ist, daß das erste, zweite und dritte Kappensegment (71, 72, 73) im Betrieb vom wenigstens einen vibrierenden Rohrsegment (41) beabstandet bleiben,
--- und zur Erhöhung von deren Druckfestigkeit wenigstens ein das zweite und das dritte Kappensegment (72, 73) miteinander verspannendes Spannelement (11) umfaßt.

2. Meßaufnehmer nach Anspruch 1, wobei das zweite und dritte Kappensegment (72, 73) jeweils in einer Tangentialebene des ersten Kappensegments (71) liegen.

3. Meßaufnehmer nach Anspruch 1, wobei das zweite und das dritte Kappensegment (72, 73) dem Einstellen der erforderlichen Biegesteifigkeit dienende Versteifungselemente (10a, 10b) aufweisen.

4. Meßaufnehmer nach einem der vorherigen Ansprüche, wobei dem das Spannelement (11) ein das zweite und das dritte Kappensegment (72, 73) durchstoßender Zugbolzen ist.

5. Meßaufnehmer nach Anspruch 3 und 4, wobei die Versteifungselemente (10a, 10b) mittels des Zugbolzens gegen das zweite bzw. dritte Kappensegment (72, 73) gedrückt gehaltene Versteifungsplatten von vorgebbarer Dicke sind.

## Claims

1. Vibronic-type sensor (1), said sensor comprising:
- at least one measuring tube to conduct a fluid;
- a support frame (6), particularly a tubular support frame, to support the measuring tube (4); as well as
- a housing cap (7) to enclose at least one bent pipe segment (41) of the measuring tube (4) conducting the fluid, said segment vibrating while the sensor (1) is in operation
-- wherein the housing cap (7)
--- comprises a canal-shaped first cap segment (71) with an arc-shaped first segment edge (71 a) of a predefinable radius R and with a second segment edge (71 b) essentially formed identically to the first segment edge (71 a),
--- an essentially planar second cap segment (72) which is connected to the first segment edge (71 a) of the first cap segment (71) via an arc-shaped first segment edge (72a), as well as
--- a third cap segment (73) which is essentially in mirror symmetry to the second cap segment (72), said third cap segment being connected to the second segment edge (71 b) of the first cap segment (71) via an arc-shaped first segment edge (73a),
---- wherein the first cap segment (71) has an arc-shaped cross-section with a radius r, which is smaller than the radius R of the first segment edge (71a),
and
---- wherein the second and third cap segment (72, 73) each has a far greater flexural rigidity than the first cap segment (71), and
-- wherein the housing cap (7)
--- is fixed on the support frame (6) via a third segment edge (71c) and a fourth segment edge (71 d) of the first cap segment (71), and via a second segment edge (72b) or (73b), respectively, of the second and third cap segment (72, 73) in such a way that the first, second and third cap segment (71, 72, 73) remain at a distance from at least one vibrating pipe segment (41) during operation,
--- and comprises a clamping element (11), clamping together the second and third cap segment (72, 73), in order to increase resistance to pressure.

2. Sensor as claimed in Claim 1, wherein the second and third cap segment (72, 73) are each situated in a tangential plane of the first cap segment (71).

3. Sensor as claimed in Claim 1, wherein the second and third cap segment (72, 73) have stiffener elements (10a, 10b) which serve to regulate the necessary flexural rigidity.

4. Sensor as claimed in one of the previous claims, wherein the clamping element (11) is a tension bolt traversing the second and third cap segment (72, 73).

5. Sensor as claimed in Claim 3 or 4, wherein the stiffener elements (10a, 10b) are stiffener plates of a predefinable thickness pressed against the second or third cap segment (72, 73), respectively, by means of the tension bolt.

## Revendications

1. Capteur (1) du type à vibrations, lequel capteur comprend :
- au moins un tube de mesure destiné au guidage d'un fluide ;
- un cadre support (6), notamment tubulaire, supportant le tube de mesure (4) ; ainsi que
- un capot de boîtier (7) destiné au capotage d'au moins un segment tubulaire (41) coudé, vibrant pendant le fonctionnement du capteur (1), du tube de mesure (4) guidant le fluide,
-- pour lequel le capot de boîtier (7)
--- comprend un premier segment de capot (71) en forme de canal, lequel segment présente un premier bord de segment (71 a) en forme d'arc de cercle, de rayon R prédéfinissable, et un deuxième bord de segment (71 b) formé pour l'essentiel de façon identique au premier bord de segment (71 a),
--- un deuxième segment de capot (72) pour l'essentiel plan, lequel segment est relié avec le premier bord de segment (71a) du premier segment de capot (71) par l'intermédiaire d'un premier bord de segment (72a) en forme d'arc de cercle, ainsi que
--- un troisième segment de capot (73) pour l'essentiel symétrique au deuxième segment de capot (72), lequel troisième segment est relié avec le deuxième bord de segment (71 b) du premier segment de capot (71) par l'intermédiaire d'un premier bord de segment (73a) en forme d'arc de cercle,
---- pour lequel le premier segment de capot (71) présente une section en forme d'arc
de cercle avec un rayon r, qui est inférieur au rayon R du premier bord de segment
(71 a), et
---- pour lequel le deuxième et troisième segment de capot (72, 73) présentent chacun
une rigidité à la flexion nettement supérieure à celle du premier segment de capot (71), et
-- pour lequel le capot de boîtier (7)
--- est fixé, par l'intermédiaire d'un troisième bord de segment (71c) et d'un quatrième bord de segment (71d) du premier segment de capot (71), ainsi que par l'intermédiaire d'un deuxième bord de segment (72b) ou (73b) respectivement du deuxième et du troisième segment de capot (72, 73), au cadre support (6) de telle manière que le premier, le deuxième et le troisième segment de capot (71, 72, 73), en fonctionnement, restent à distance de l'au moins un segment de tube (41) vibrant,
--- et comprend, pour l'augmentation de la résistance à la pression, au moins un élément de serrage (11) serrant ensemble le deuxième et le troisième segment de capot (72, 73).

2. Capteur selon la revendication 1, pour lequel le deuxième et le troisième segment de capot (72, 73) se situent chacun dans un plan tangent du premier segment de capot (71).

3. Capteur selon la revendication 1, pour lequel le deuxième et le troisième segment de capot (72, 73) présentent des éléments de rigidification (10a, 10b) servant au réglage de la nécessaire rigidité à la flexion.

4. Capteur selon l'une des revendications précédentes, pour lequel l'élément de serrage (11) est un tirant traversant le deuxième et le troisième segment de capot (72, 73).

5. Capteur selon la revendication 3 ou 4, pour lequel les éléments de rigidification (10a, 10b) sont des plaques de rigidification d'épaisseur prédéfinissable, maintenues appuyées contre le deuxième ou le troisième segment de capot (72, 73) au moyen du tirant.
